# EUROPEAN PATENT APPLICATION

(11) **EP 4 830 504 A1**
(43) Date of publication of application: **28.10.2026**
(21) Application number: 25222249.2
(22) Date of filing: 10.12.2025
(51) Int. Cl.: A01D 34/00, B60L 53/37

(54) **A ROBOTIC LAWN MOWER AND INTERACTION STATION WITH ENHANCED POSITION DETERMINING ARRANGEMENTS**

(30) Priority: 25.04.2025 SE 2550391
(71) Applicant: Husqvarna AB, 561 82 Huskvarna (SE)
(72) Inventor: Hecktor, Ulrik, 561 82 Huskvarna (SE); Hammarström, Martin, 561 82 Huskvarna (SE); Johansson, Mikael C., 561 82 Huskvarna (SE)

(57) **Abstract**

The present disclosure relates to a robotic lawn mower (100) comprising a main control unit (110) and a light reception arrangement (180) that comprises a receiver lens (181), a receiver light diffuser (182) and a plurality of separate light sensing elements (183ah) adapted to detect incoming light (190) via the receiver lens (181) and the receiver light diffuser (182), and has been transmitted (290) by an external light source (280). The main control unit (110) is adapted to determine a first angle (A) between, on the one hand, a connecting line (L) that runs between the light reception arrangement (180) and an external light source (280) that comprises at least two separate light transmitters (283a, 283b) adapted to transmit mutually different light sequences (S₁, S₂), and, on the other hand, a transmitted light boresight direction (D_{B}), a second angle (B) between the charging direction (C) and the connecting line (L). The main control unit (110) is adapted to determine the first angle (A) by determining a degree of correlation for each light sequence (S₁, S₂) of the detected incoming light (190), and to determine the second angle (B) by determining the distribution of incoming light (190) across the receiver light diffuser (182).

## Description

### TECHNICAL FIELD

The present disclosure relates to a robotic lawn mower comprising a body, a main control unit, at least one rotatable grass cutting disc having a disc rotation axle, at least one pair of drive wheels and a charging reception arrangement that is adapted to be electrically connected to a charging transmission arrangement at a robotic lawn mower interaction station and faces a charging direction.

### BACKGROUND

Robotic lawn mowers are becoming increasingly more popular. A robotic lawn mower is usually battery-powered by means of a rechargeable battery and is adapted to cut grass on a user's lawn automatically. A robotic lawn mower can be charged automatically without intervention of the user, and does normally not need to be manually managed after being set once. When the need for charging arises, the robotic lawn mower automatically travels to a charging station, docks with the charging station such that a lawn mower charging interface makes electrical connection with a charging connector at the charging station.

In a typical deployment a work area, such as a garden, park, sports field, golf court and the like, the work area is enclosed by a boundary that can be in the form of a boundary wire with the purpose of keeping the robotic lawn mower inside the work area. An electric control signal may be transmitted through the boundary wire thereby generating an (electro-) magnetic field emanating from the boundary wire.

Alternatively, or as a supplement, the robotic lawn mower can be equipped with a navigation system that is adapted for satellite navigation by means of GPS (Global Positioning System) or some other Global Navigation Satellite System (GNSS) system, for example using Real Time Kinematic (RTK). A boundary is in this case not defined by a physical wire, but by a virtual boundary.

Traditionally a robotic lawn mower uses the boundary wire and/or other navigation systems for roughly locating the charging station. So-called F-and N-fields, magnetic fields emanating from wires comprised in the charging station, are used to communicate with the mower for the last sequence of the docking procedure for a precise docking such that electrical connection can be made between the lawn mower charging interface and the charging connector at the charging station.

When using vision technology, the robotic lawn mower uses a vision system comprising a camera for roughly locating the charging station. For the last sequence of the docking when the robotic lawn mower is close to the charging station, the camera could be used, instead of the F- and N-field, for the precise docking. However, having the camera in the front and the charging interface at the back of the robotic lawn mower creates a problem. The robotic lawn mower has to rotate about 180 degrees and reverse into the charging station without knowing exactly where it is positioned relative to the charging connector, which may create an unprecise docking procedure. This makes it difficult to ensure that electrical connection can be made with the charging connector at the charging station.

It is therefore desired to provide means and methods for enabling a precise docking between a robotic lawn mower and a at a robotic lawn mower interaction station. The interaction station may be a charging station, where it is desired to ensure that electrical connection is made between a lawn mower charging reception arrangement and a charging transmission arrangement at the charging station. This is for example desired when the robotic lawn mower uses vision technology with a camera and has the camera in the front and its charging interface at the back.

### SUMMARY

The object of the present disclosure is to provide means and methods for enabling a precise docking between a robotic lawn mower and a robotic lawn mower interaction station. The interaction station may be a charging station, where it is desired to ensure that electrical connection is made between a lawn mower charging reception arrangement and a charging transmission arrangement at the charging station.

This object is achieved by means of a robotic lawn mower comprising a body, a main control unit, at least one rotatable grass cutting disc having a disc rotation axle, at least one pair of drive wheels and a charging reception arrangement that is adapted to be electrically connected to a charging transmission arrangement at a robotic lawn mower interaction station and faces a charging direction. The robotic lawn mower further comprises a light reception arrangement that comprises a receiver lens that faces the charging direction, a receiver light diffuser and a plurality of separate light sensing elements. The light sensing elements are adapted to detect incoming light that has been received via the receiver lens and the receiver light diffuser, and has been transmitted by an external light source. The main control unit is adapted to determine a first angle between, on the one hand, a connecting line that runs between the light reception arrangement and an external light source that comprises at least two separate light transmitters that are adapted to transmit mutually different light sequences, and, on the other hand, a transmitted light boresight direction, and a second angle between the charging direction and the connecting line. The main control unit is adapted to determine the first angle by determining a degree of correlation for each light sequence of the detected incoming light, and to determine the second angle by determining the distribution of incoming light across the receiver light diffuser.

By determining the first angle and the second angle, the main control unit is able to establish the position of the robotic lawn mower relative to the external light source and to control the robotic lawn mower to move towards the external light source that for example may be comprised in a charging station. This enables a precise docking between a robotic lawn mower and a robotic lawn mower interaction station. The interaction station may be a charging station, where the present disclosure ensures that electrical connection is made between a lawn mower charging reception arrangement and a charging transmission arrangement at the charging station.

According to some aspects, the robotic lawn mower is adapted for a forward traveling direction and a reverse travelling direction, where the charging direction either corresponds to the forward traveling direction or to the reverse travelling direction. This means that the present disclosure can be applicable for both rear-wheel driven robotic lawn mowers and front-wheel driven robotic lawn mowers.

According to some aspects, the light sensing elements are constituted by photo transistors that mainly are linearly arranged in a horizontal plane. This means that inexpensive standard components can be used.

According to some aspects, each light sensing element is connected in series with a corresponding first amplifier, a corresponding high pass filter and a corresponding second amplifier such that a corresponding series circuit is formed, each series circuit forming a corresponding signal channel.

According to some aspects, each first amplifier is a transimpedance amplifier adapted to bias and amplify a corresponding first signal received from the corresponding light sensing element, and each second amplifier is a programmable gain amplifier (PGA) that is adapted to amplify a third signal received from the high pass filter and is controlled by the main control unit.

This means that the light reception arrangement can be realized using inexpensive standard components.

According to some aspects, the light sequences are digital light sequences, where the main control unit comprises an Analog to Digital Converter (ADC) unit adapted to sample the signal output from each signal channel. This means that the signal processing can be performed by using any ordinary components, and ensures a reliable detection of the light sequences

According to some aspects, the main control unit is adapted to perform ADC recordings for the corresponding output of each signal channel and to perform cross correlation calculations between each received digital sequence in the ADC recording and predetermined corresponding digital sequences to determine if the respective digital sequence has been received. If this is the case, the main control unit is adapted to choose the channel signal that has provided the highest cross correlation value, and to determine a relationship between the respective cross correlation value for the digital sequences, and to determine the first angle from this relationship.

In this manner, if one digital sequence is determined to have a larger cross correlation value than the other, this means that the robotic lawnmower is off to one side relative to the transmitted light boresight direction. If the other digital sequence is determined to have a larger cross correlation value, it is off to the other side relative to the transmitted light boresight direction. If both signals are equal, the mower is right in front of the transmitted light boresight direction.

According to some aspects, the main control unit is adapted to calculate a weighted mean value of the received amount of light at each light sensing element, where the weighted mean value gives the position at which incoming light has incided at the light diffuser via the receiver lens, and where this position is proportional to the second angle. The second angle is thus determined by analysis of the distribution of light across the receiver light diffuser.

According to some aspects, the light reception arrangement is an infrared (IR) light reception arrangement adapted to detect incoming IR light that has been received via the receiver lens and the receiver light diffuser and has been transmitted by an external IR light source. According to some further aspects, the IR light comprises at least one of near IR (NIR) light and ShortWave IR (SWIR) light. Using IR light is advantageous since IR light frequencies are absorbed in the atmosphere to a higher degree than visible light, which results in that inciding sun light comprises less IR light than visible light. It is therefore less naturally occurring IR light than visible light that can disturb the light reception arrangement.

This object is also achieved by means of a robotic lawn mower interaction station adapted to receive an oncoming robotic lawn mower, where the interaction station comprises a charging transmission arrangement that is adapted to provide a charge current to a charging reception arrangement of a docked robotic lawn mower. The interaction station comprises an light transmission arrangement which in turn comprises at least two separate light transmitters that are adapted to transmit mutually different light sequences via a transmitter light diffuser and a transmitter lens.

This way, a light reception arrangement of a robotic lawn mower can receive the light sequences, enabling a main control unit to establish the position of the robotic lawn mower relative to the light transmission arrangement and to control the robotic lawn mower to move towards the light transmission arrangement and thus towards the interaction station that for example is a charging station. This enables a precise docking between a robotic lawn mower and a robotic lawn mower interaction station. In case the interaction station is a charging station, the present disclosure ensures that electrical connection is made between a lawn mower charging reception arrangement and a charging transmission arrangement at the charging station.

According to some aspects, the light sequences are digital light sequences, and according to some further aspects the digital light sequences are formed by so-called Gold codes such that digital light sequences that are transmitted at the same time have a minimized mutual cross-correlation. A minimized mutual cross-correlation enables an uncomplicated identification of the different light sequences

According to some aspects, the light transmitters are linearly arranged and adapted to transmit mutually different light sequences along a transmitted light boresight direction. This means that the transmitter lens can project the transmitted light from the transmitter light diffuser into an area in front of the charging station, thus creating a light radiation pattern with two lobes that partially overlap along the transmitted light boresight direction. The overlap may be centered around the transmitted light boresight direction. This provides a controlled light distribution.

According to some aspects, the light transmission arrangement is an infrared (IR) light transmission arrangement which in turn comprises at least two separate IR light transmitters adapted to transmit mutually different IR light sequences. According to some further aspects, the IR light comprises at least one of near IR (NIR) light and ShortWave IR (SWIR) light. Using IR light is advantageous since IR light frequencies are absorbed in the atmosphere to a higher degree than visible light, which results in that inciding sun light comprises less IR light than visible light. It is therefore less naturally occurring IR light than visible light that can disturb the transmitted IR light sequences.

This object is also achieved by means of robotic lawn mower systems, computer-implemented methods and computer program products that are associated with above advantages.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present disclosure will become apparent when studying the appended claims and the following description. The skilled person realizes that different features of the present disclosure may be combined to create embodiments other than those described in the following, without departing from the scope of the present disclosure.

### BRIEF DESCRIPTION OF THE DRAWINGS

The present disclosure will now be described more in detail with reference to the appended drawings, where:
- Figure 1: shows a perspective front view of a robotic lawn mower;
- Figure 2: shows a perspective back view of the robotic lawn mower;
- Figure 3: shows a schematic overview of the robotic lawn mower;
- Figure 4: shows a schematic side view of the robotic lawn mower docking with a robotic lawn mower interaction station;
- Figure 5: shows a schematic top view of a robotic lawn mower system;
- Figure 6: shows a perspective front view of a robotic lawn mower interaction station;
- Figure 7: shows a schematic front view of the robotic lawn mower interaction station;
- Figure 8: shows a schematic overview of an IR light reception arrangement and an IR light transmission arrangement;
- Figure 9: shows a sequence block diagram that illustrates a state machine;
- Figure 10: shows a computer program product;
- Figure 11: shows a first digital IR light sequence;
- Figure 12: shows a second digital IR light sequence; and
- Figure 13: shows a flowchart for methods according to the present disclosure.

### DETAILED DESCRIPTION

Aspects of the present disclosure will now be described more fully hereinafter with reference to the accompanying drawings. The different devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the present disclosure. As used herein, the singular forms "a", "an" and "the" are intended to include the plural forms as well, unless the context clearly indicates otherwise.

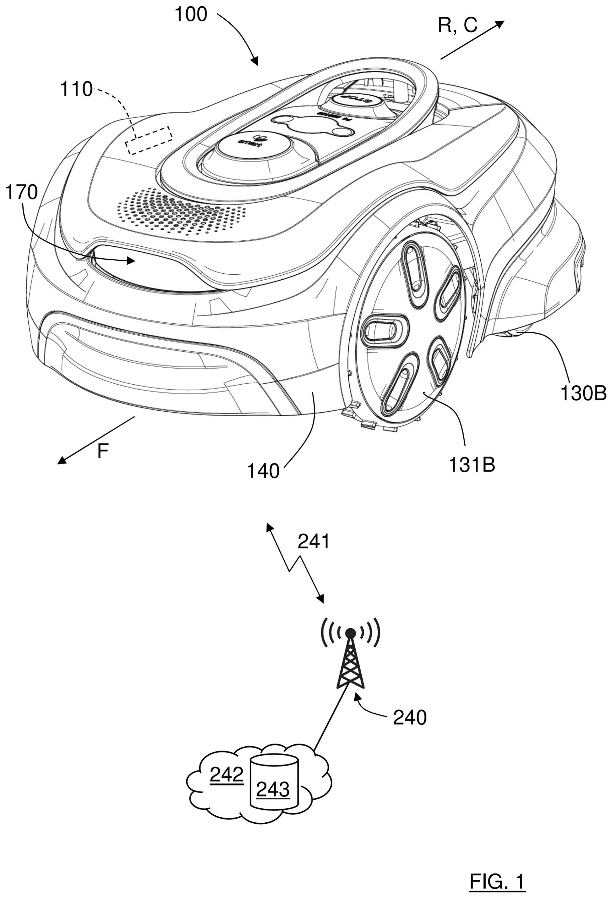

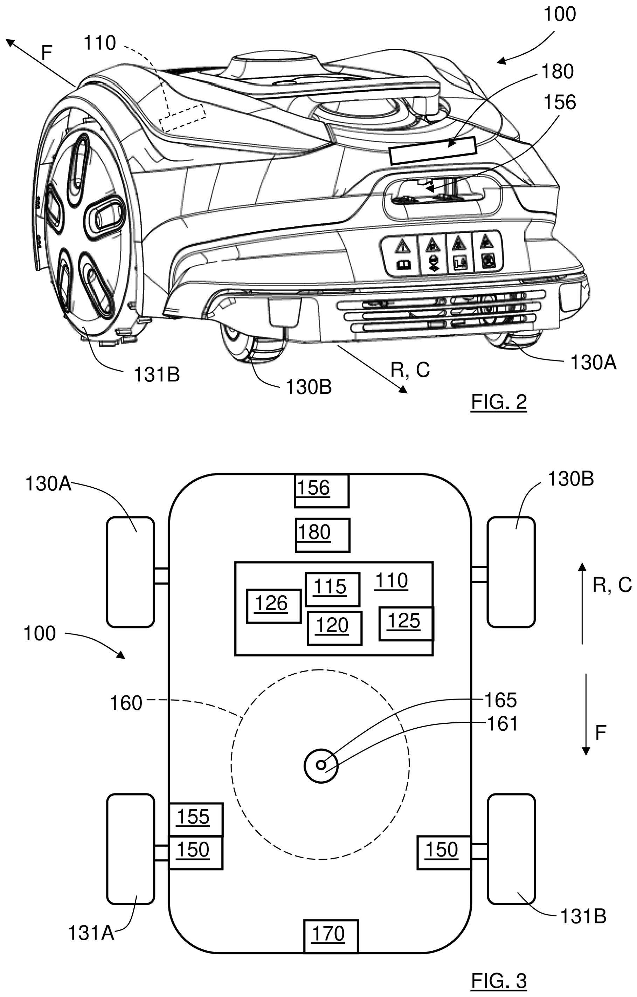

In the following, it is referred to Figure 1, Figure 2 and Figure 3. Figure 1 shows a perspective front side view of a robotic lawn mower 100, Figure 2 shows a perspective rear side view of a robotic lawn mower 100, and Figure 3 shows a schematic overview of the robotic lawn mower 100.

The robotic lawn mower 100 comprises a body 140, a main control unit 110, at least one pair of drive wheels 131A, 131B, and at least one rotatable grass cutting disc 160, having a disc rotation axle 165. In the illustrated example, the robotic lawn mower 100 comprises two swivelable wheels 130A, 130B. The drive wheels 131A, 131B may according to some aspects be front wheels that are positioned to face a forward travelling direction F such that the robotic lawn mower 100 is front-wheel driven.

According to some aspects, the rotatable cutting disc 160 is driven by a cutter motor 161, and the drive wheels 131A, 131B are drivably connected to an electric drive wheel motor 150.

According to some further aspects, the robotic lawn mower 100 comprises a rechargeable electric power source 155, such as a battery 155, adapted to provide power to the electric motors 150, 161, and an environmental detection system 170 that for example comprises at least one of a radar transceiver, an ultrasonic device, a Lidar device, a navigation arrangement and/or a boundary wire sensor. According to some further aspects, the main control unit 110 is adapted to control and position the robotic lawn mower 100 by means of input derived from the environmental detection system 170.

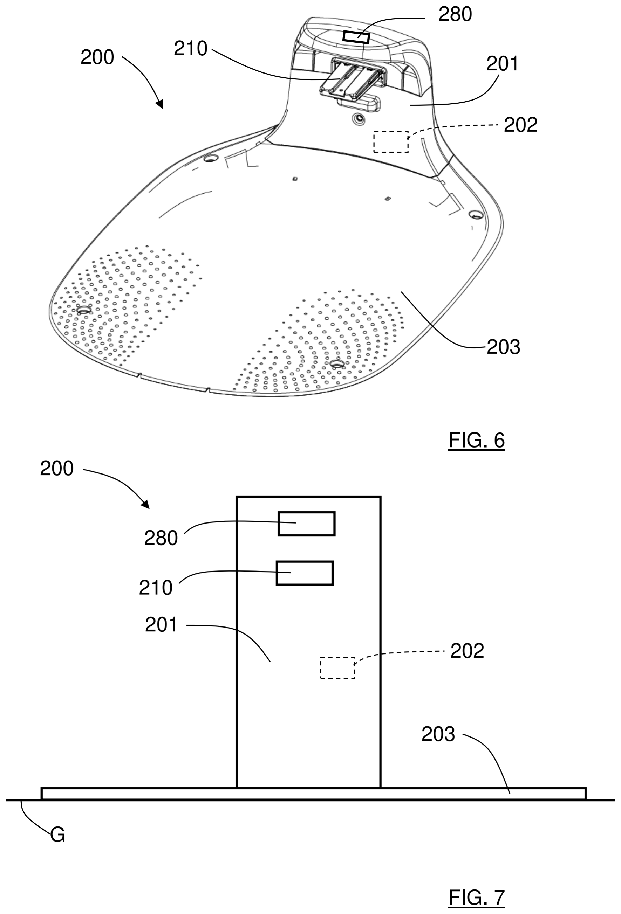

The robotic lawn mower 100 further comprises a charging reception arrangement 156, for example in the form of charging skids. The charging reception arrangement 156 faces a charging direction C and is adapted to be electrically connected to a charging transmission arrangement at a charging station, generally constituted by a robotic lawn mower interaction station 200 as for example illustrated in Figure 6 and Figure 7.

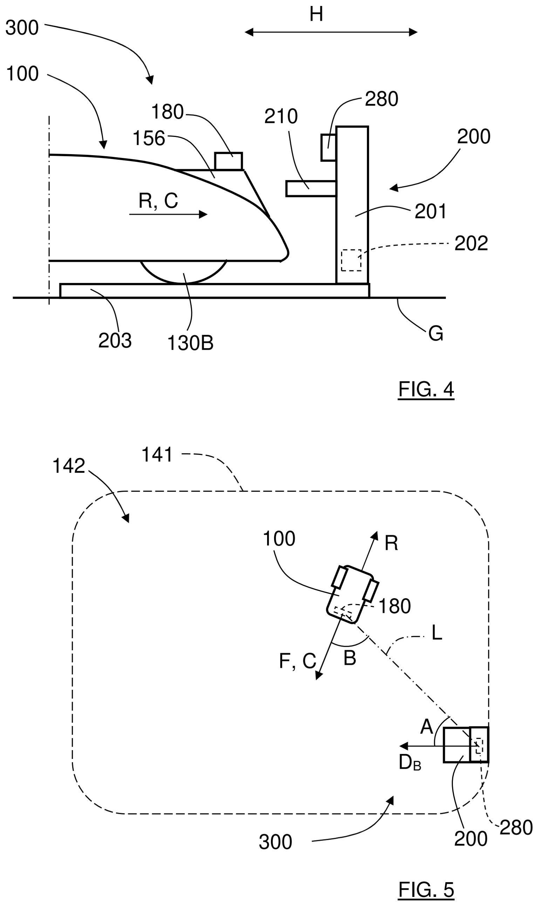

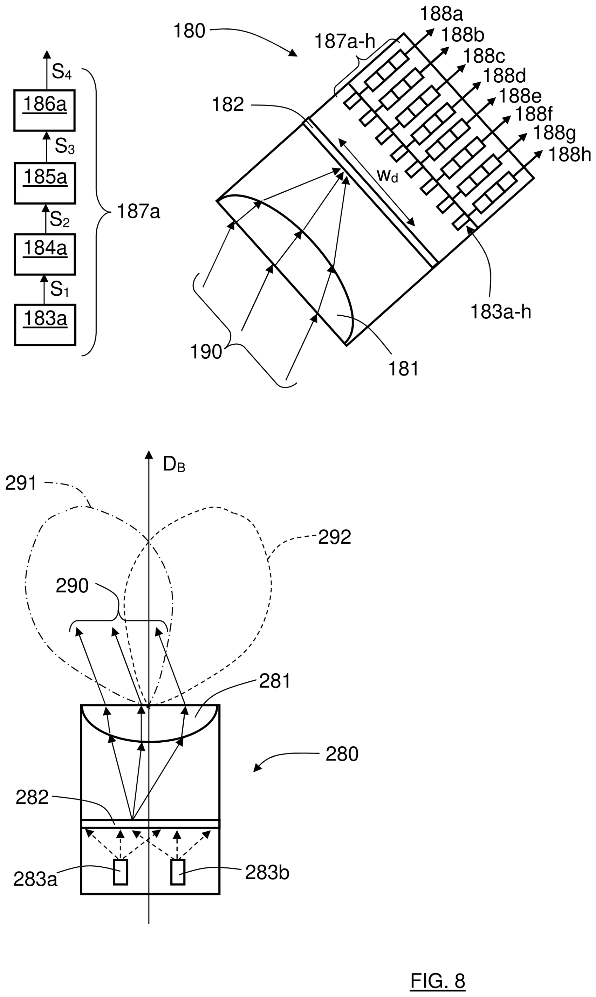

According to the present disclosure, with reference also to Figure 5 that shows a schematic top view of a robotic lawn mower system and Figure 8 that shows a schematic overview of an IR light reception arrangement and an IR light transmission arrangement, the robotic lawn mower 100 further comprises a light reception arrangement 180 that comprises a receiver lens 181 that faces the charging direction C, a receiver light diffuser 182 and a plurality of separate light sensing elements 183ah that are adapted to detect incoming light 190 that has been received via the receiver lens 181 and the receiver light diffuser 182 and has been transmitted 290 by an external light source 280.

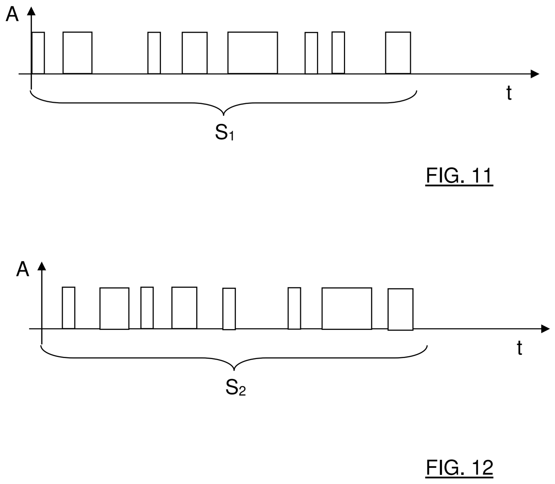

With reference also to Figure 11 that shows an example of a first light sequence S₁ and Figure 12 that shows an example of a second light sequence S₂, the main control unit 110 is adapted to determine a first angle A between, on the one hand, a connecting line L that runs between the light reception arrangement 180 and an external light source 280 that comprises at least two separate light transmitters 283a, 283b that are adapted to transmit mutually different light sequences S₁, S₂, and, on the other hand, a transmitted light boresight direction D_{B}.

The main control unit 110 is further adapted to determine a second angle B between the charging direction C and the connecting line L

The main control unit 110 is adapted to determine the first angle A by determining a degree of correlation for each light sequence S₁, S₂ of the detected incoming light 190, and to determine the second angle B by determining the distribution of incoming light 190 across the receiver light diffuser 182. According to some aspects, the incoming light 190 is projected as a vertical line on the receiver light diffuser 182.

By determining the first angle A and the second angle B, the main control unit 110 is able to establish the position of the robotic lawn mower 100 relative to the external light source 280 and to control the robotic lawn mower 100 to move towards the external light source 280 that for example may be comprised in a charging station as will be described later.

The light reception arrangement 180 can for example be described as a low resolution 1D camera. The receiver lens 181 collects incoming light 190 onto the receiver diffuser 182 that is placed in the focal plane of the receiver lens 181. The receiver light diffuser 182 refracts the light onto the light sensing elements 183a-h and produces a wider distribution of light over the light sensing elements 183a-h, which gives a high angular resolution and prevents light from falling between light sensing elements 183a-h. It also increases immunity against dirt on the receiver lens 181.

According to some aspects, the robotic lawn mower 100 is adapted for a forward traveling direction F and a reverse travelling direction R, where the charging direction C either corresponds to the forward traveling direction F or to the reverse travelling direction R. This means that the present disclosure can be applicable for both rear-wheel driven robotic lawn mowers and front-wheel driven robotic lawn mowers. In the illustrated example, the charging direction C corresponds to the reverse travelling direction R. This means that the first angle A and the second angle B can be used for guiding the robotic lawn mower 100 in the charging direction C.

According to some aspects, the light sensing elements 183a-h are constituted by photo transistors that mainly are linearly arranged in a horizontal plane H. This means that inexpensive standard components can be used.

According to some aspects, each light sensing element 183a-h is connected in series with a corresponding first amplifier 184a, a corresponding high pass filter 185a and a corresponding second amplifier 186a such that a corresponding series circuit 187a-h is formed, each series circuit 187a-h forming a corresponding signal channel. According to some further aspects, each first amplifier 184a is a transimpedance amplifier adapted to bias and amplify a corresponding first signal S₁ received from the corresponding light sensing element 183a-h, and where each second amplifier 186a is a programmable gain amplifier, PGA, that is adapted to amplify a third signal S₃ received from the high pass filter 185a and is controlled by the main control unit 110. This is of course only an example, for example the PGA can be exchanged with any other suitable type of amplifier with fixed gain, and if the signal is sufficiently strong, the PGA can be omitted.

This means that the light reception arrangement 180 can be realized using inexpensive standard components.

According to some aspects, as in particular indicated in Figure 11 and Figure 12, the light sequences S₁, S₂ are digital light sequences S₁, S₂, where the main control unit 110 comprises an Analog to Digital Converter, ADC, unit 126 adapted to sample the signal output from each signal channel 187a-h. The digital light sequences S₁, S₂ are thus binary sequences that preferably should have as small mutual cross correlation as possible and have a substantially equal distribution of the numbers 1 and 0.

This means that the signal processing can be performed by using any ordinary components, and ensures a reliable detection of the light sequences S₁, S₂,

According to some aspects, the main control unit 110 is adapted to perform ADC recordings for the corresponding output 188a-h of each signal channel 187a-h and to perform cross correlation calculations between each received digital sequence S₁, S₂ in the ADC recording and predetermined corresponding digital sequences S₁', S₂' to determine if the respective digital sequence S₁, S₂ has been received. If this is the case, the main control unit 110 is adapted to choose the signal channel 187a-h that has provided the highest cross correlation value, and to determine a relationship between the respective cross correlation value for the digital sequences S₁, S₁'; S₂, S₂', and to determine the first angle A from this relationship.

This means that the signal channel 187a-h with the largest correlation maximum is determined, preferably having a signal to noise ratio (SNR) that exceeds an SNR threshold. For this signal channel 187a-h, the correlation result of both digital sequences S₁, S₂ are compared. If one digital sequence S₁, S₂ is determined to have a larger cross correlation value than the other, this means that the robotic lawnmower 100 is off to one side relative to the transmitted light boresight direction D_{B}. If the other digital sequence S₁, S₂ is determined to have a larger cross correlation value, it is off to the other side relative to the transmitted light boresight direction D_{B}. If both signals are equal, the mower is right in front of the transmitted light boresight direction D_{B}.

According to some aspects, the main control unit 110 is adapted to calculate a weighted mean value of the received amount of light at each light sensing element 183a-h, where the weighted mean value gives the position at which incoming light 190 has incided at the receiver light diffuser 182 via the receiver lens 181, and where this position is proportional to the second angle B.

The second angle B is thus determined by analysis of the distribution of light across the receiver light diffuser 182. The maximums of the cross correlation calculations described above, preferably having an SNR that exceeds the SNR threshold can according to some aspects be regarded as spatial samples along the diffusor width w_{d}.

According to some aspects, by giving every signal channel 187a-h a weight, with 0 in the middle of the receiver light diffuser 182, negative weights towards one side along the diffusor width w_{d} and positive weights towards a second side along the diffusor width w_{d}, the weighted mean can be calculated.

Practically, as will be described later, the external light source 280 may be arranged at a charging station, generally constituted by a robotic lawn mower interaction station 200, and be used for guiding the robotic lawnmower 100 towards the charging station 200.

According to some aspects, the light reception arrangement 180 is an infrared, IR, light reception arrangement 180 adapted to detect incoming IR light 190 that has been received via the receiver lens 181 and the receiver light diffuser 182 and has been transmitted 290 by an external IR light source 280.

According to some further aspects, the IR light comprises at least one of near IR, NIR, light and ShortWave IR, SWIR light. Using IR light is advantageous since IR light frequencies are absorbed in the atmosphere to a higher degree than visible light, which results in that inciding sun light comprises less IR light than visible light. It is therefore less naturally occurring IR light than visible light that can disturb the light reception arrangement.

With reference to Figure 1 - Figure 8, Figure 11 and Figure 12, the present disclosure also relates to a robotic lawn mower interaction station 200, for example a charging station 200, adapted to receive an oncoming robotic lawn mower 100. The interaction station 200 comprises a charging transmission arrangement 210 that is adapted to provide a charge current to a charging reception arrangement 156 of a docked robotic lawn mower 100. The interaction station 200 further comprises a light transmission arrangement 280 which in turn comprises at least two separate light transmitters 283a, 283b that are adapted to transmit mutually different light sequences S₁, S₂ via a transmitter light diffuser 282 and a transmitter lens 281.

This way, a light reception arrangement 180 of a robotic lawn mower 100 as described herein can receive the light sequences S₁, S₂, enabling the main control unit 110 to establish the position of the robotic lawn mower 100 relative to the light transmission arrangement 280 and to control the robotic lawn mower 100 to move towards the light transmission arrangement 280 and thus towards the interaction station 200 that for example is a charging station 200. This enables a precise docking between a robotic lawn mower and a robotic lawn mower interaction station. In case the interaction station 200 is a charging station, the present disclosure ensures that electrical connection is made between a lawn mower charging reception arrangement 156 and a charging transmission arrangement 210 at the charging station 200, see Figure 4 that shows a schematic side view of the robotic lawn mower 110 docking with a robotic lawn mower interaction station 200, such as a charging station 200.

In the following, the terms interaction station and charging station are used interchangeably.

The external light source described previously can thus be constituted by the light transmission arrangement 280 according to the above.

According to some aspects, the interaction station 200 comprises a ground plate 203 that is adapted to be positioned on the ground G and onto which a robotic lawn more at least partly is adapted to be positioned when docked, and a docking tower 201 that in turn comprises the charging transmission arrangement 210 and the light transmission arrangement 280. According to some aspects, the interaction station 200 further comprises a station control unit 202 that is adapted to control the light transmission arrangement 280, charging, and possible communication with the main control unit 110. According to some aspects, the station control unit 202 may be a part of the main control unit 110.

According to some aspects, as in particular indicated in Figure 11 and Figure 12, the light sequences S₁, S₂ are digital light sequences S₁, S₂. The digital light sequences S₁, S₂ are thus binary sequences that preferably should have as small cross correlation as possible and have an equal number of 1's and 0's This means that the signal processing can be performed by using any ordinary components, and ensures a reliable detection of the light sequences S₁, S₂. According to some further aspects, the digital light sequences S₁, S₂ are formed by so-called Gold codes such that digital light sequences S₁, S₂ that are transmitted at the same time have a minimized mutual cross-correlation. Other suitable randomized digital sequences can also be used. This facilitates separation of the codes at a light reception arrangement 180 such as the one described previously. A minimized mutual cross-correlation enables an uncomplicated identification of the different light sequences S₁, S₂.

According to some aspects, the light transmitters 283a, 283b are linearly arranged and adapted to transmit mutually different light sequences along a transmitted light boresight direction D_{B}. This means that the transmitter lens 281 can project the transmitted light 290 from the transmitter light diffuser 282 into an area in front of the charging station, thus creating a light radiation pattern with two lobes 291, 292 that partially overlap along the transmitted light boresight direction D_{B}. The overlap may be centered around the transmitted light boresight direction D_{B}. This provides a controlled light distribution.

According to some aspects, the transmitter lens 281 is placed such that its focal plane lies on the plane of transmitter light diffuser 282. The transmitter lens 281 projects the diffused light that has been refracted by the transmitter light diffuser 282. Every point along the transmitter light diffuser 282 corresponds to an angle, where the angular distribution of the transmitted light 190 exiting the transmitter lens 281 corresponds to the distribution of light across the transmitter light diffuser 282.

According to some aspects, the light transmission arrangement 280 is an infrared, IR, light transmission arrangement 280 which in turn comprises at least two separate IR light transmitters 283a, 283b adapted to transmit mutually different IR light sequences S₁, S₂. According to some further aspects, the IR light comprises at least one of near IR, NIR, light and ShortWave IR, SWIR light. Using IR light is advantageous since IR light frequencies are absorbed in the atmosphere to a higher degree than visible light, which results in that inciding sun light comprises less IR light than visible light. It is therefore less naturally occurring IR light than visible light that can disturb the transmitted IR light sequences.

With reference to Figure 1 - Figure 8, the present disclosure also relates to a robotic lawn mower system 300 comprising the robotic lawn mower 100 and the robotic lawn mower interaction station 200 as described herein.

As mentioned above, the transmitted light 290 may according to some aspects be transmitted by two lobes 291, 292 that partially overlap along the transmitted light boresight direction D_{B}. The light reception arrangement 180 comprises the receiver lens 181 that collects received light on the receiver light diffuser 182, where the light is measured by the plurality of separate light sensing elements 183a-h that are adapted to detect incoming light 190 that has been received via the receiver lens 181 and the receiver light diffuser 182.

If needed, analog electronics can be used to amplify the relatively weak signals before they are processed by the main control unit 110 such that the two angles A, B are calculated.

The robotic lawn mower system 300 consumes relatively little power and is quite resilient to dirt, because of its design. The robotic lawn mower system 300 can be used for guiding the robotic lawnmower 100 from a certain docking point to the charging station 200 such that the charging transmission arrangement 210 can provide a charge current to the charging reception arrangement 156 of the robotic lawn mower 100 when docked. The robotic lawnmower 100 is guided to the charging station 200 by using the calculated first angle A and second angle B to navigate from the docking point to the charging station 200. This guiding can be done in many ways, and will not be described more in detail here.

In order to be able to calculate the angles A, B, the main control unit 110 should according to some aspect have information regarding the transmitted light sequences S₁, S₂ in order to calculate cross correlation between each received light sequence S₁, S₂ in the ADC recording and predetermined, previously known, corresponding digital sequences S₁', S₂' to determine if the respective digital sequence S₁, S₂ has been received.

One way to achieve this is to use the same light sequences S₁, S₂ in all charging stations 200. However, if two charging stations 200 are placed next to each other, this could become a problem. Alternatively, there may be a number of available sets of light sequences S₁, S₂ where, for example, a certain set of light sequences S₁, S₂ can be identified by a digit in a charging station serial number, for example a last digit or supplementary digit. This information could then manually be entered into the main control unit 110.

Alternatively, when the robotic lawnmower 100 is docked and ordered to perform pairing, the main control unit 110 will try to receive all different sets of light sequences S₁, S₂, one at a time, and choose the one that gives the strongest determined correlation result.

A flexible way which also provides two way communication between the charging station 200 and the robotic lawnmower 100 would be to add a single light transmitter, such as an IR light transmitter, in the light reception arrangement 180 and add a light sensing element, such as an IR light sensing element in the light transmission arrangement 280. This way, it would be possible to transmit data from the robotic lawnmower 100 to the charging station 200 to let the main control unit 110 and/or the station control unit 202 decide which light sequences S₁, S₂ to use, as well as other types of information that can be exchanged between the control units 110, 202.

As a further alternative, the main control unit 110 can be adapted to communicate with the station control unit 202 using the charging reception arrangement 156 and the charging transmission arrangement 210, overlaying data/signals on the charge voltage.

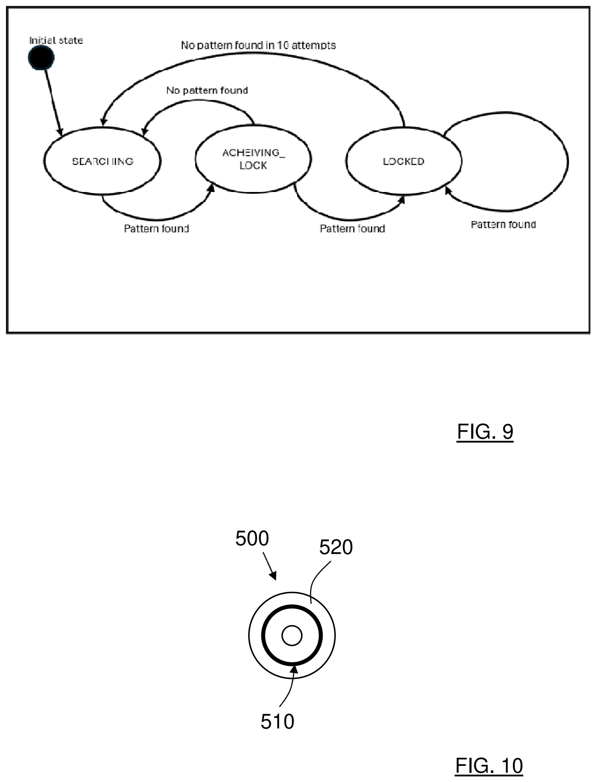

In the following, a state machine example for the main control unit 110 will be provided. Figure 9 shows a block diagram that describes the example state machine that handles the sequencing.

The sequencing is performed using a state machine with the states "SEARCHING", "ACHIEVING_LOCK" and "LOCKED". The following sections describe how the state machine functions. In the receiver, the following logic forms a feedback loop that keeps the receiver synchronized to the transmitter.

At startup, the main control unit 110 is in the SEARCHING state. The main control unit 110 starts off by storing a timestamp and sampling a set number of samples from all the outputs 188a-h of the signal channel 187a-h, constituting ADC inputs. This will be referred to as an ADC recording as described previously, and a first ADC recording is obtained. The number of collected samples is set to slightly less than two times the length of each light sequence S₁, S₂. This maximizes the chance that one or both of light sequences S₁, S₂ can be found in the sampled data, whilst making sure that an entire light sequence S₁, S₂ is only found once in the samples. To determine if a light sequence S₁, S₂ exist in the samples, calculations described below are performed.

If one or both light sequences S₁, S₂ are found, the timer that controls when the next ADC recording will be performed is set as described below, and the state is changed to ACHIEVING_LOCK. If no light sequence is found, a new ADC recording is triggered immediately, and the state machine does not change state.

In the state ACHIEVING_LOCK, a new set of samples constituting a second ADC recording is processed as described below. If one or both light sequences S₁, S₂ are found, the timer that controls when the next ADC recording will be performed is set as described below, and the state is changed to LOCKED. If none of the light sequences S₁, S₂ is found, a new ADC recording is triggered immediately, and the state is changed back to SEARCHING.

In the LOCKED state, the new set of samples constituting a third ADC recording is processed as described below. If one or both light sequences S₁, S₂ are found, the timer that controls when the next ADC recording will be performed is set as described below, a variable called "missed" is set to 0 and the state is not changed. If none of the light sequences S₁, S₂ are found, the "missed" variable is incremented by 1, and the timer that controls when the next ADC recording will be performed is set as described below.

This is repeated until either one or both light sequences S₁, S₂ are found, or the missed variable has reached 10. If one or both light sequences S₁, S₂ were found in less than or equal to 10 attempts, the missed variable is reset to 0. The timer that controls when the next ADC recording will be performed is set as described below, and the state is not changed. If none of the light sequences S₁, S₂ were found in less than or equal to 10 attempts, a new ADC recording is triggered immediately, and the state is changed back to SEARCHING. The above serves to ensure that a few missed light sequences will not result in a lost synchronization between the light reception arrangement 180 and the charging transmission arrangement 210.

In the following, examples of calculations, processing and timer setting mentioned above will be described more in detail.

The main control unit 110 is adapted to store N samples from each of its ADC inputs in a buffer after the ADC unit 126 has been triggered in one of the ways described in the sections above. The data is transferred from the ADC unit 126 to the main control unit 110 memory using DMA (Direct Memory Access). The main control unit 110 can for example be a storage medium 120 that will be described later.

According to some aspects, the main control unit 110 is then adapted to calculate the cross correlation between data from each of the signal channels 187a-h and the two light sequences S₁, S₂. The channels' data is a superposition of the transmitted light sequences S₁, S₂, noise in the stray light that incides at the light sensing element 183ah, noise in the electronics, interference as well as noise from the ADC unit 126. According to some further aspects, the light sequences S₁, S₂ are stored in the main control unit 110 using -1 and 1 instead of 0 and 1. The correlation result is therefore typically normally distributed. Since the light sequences S₁, S₂ has a 50% duty cycle, the mean is 0. The RMS (Root Mean Square) value of the correlation result is therefore the same as the standard deviation.

The control unit is then adapted to calculate the RMS (Root Mean Square) of the correlation result, and to determine the strongest sample in the correlation result and its index, i.e., at which time in the current ADC recording that the best match is found. A type of SNR can be calculated by comparing the strongest sample to the RMS value; the higher the SNR, the higher the probability that the strongest sample is a detection of a light sequence S₁, S₂. In this example there is an SNR threshold, and if the strongest sample has an SNR that exceeds the SNR threshold, its index is used as described below.

Furthermore, to determine when the next ADC recording shall be performed, a calculation based on the timestamp of the previous ADC recording, the number of periods to skip, offset and index of the maximum of the correlation result, is performed. The result of the calculation is then used to set a timer capture compare register, i.e, to set a start time for a coming ADC recording. The number of periods to skip is a parameter that determines how many number of whole light sequences S₁, S₂ to skip. This parameter depends on the length of the light sequences S₁, S₂ and how much processing power that is available, and how much time that is needed for other tasks.

The offset determines how much time ahead of the expected light sequence transmission that the ADC recording should start. This parameter depends on the accuracy of the clocks in the light reception arrangement 180 and the charging transmission arrangement 210, if the number of periods to skip is large or small, and how rugged the system has to be. If the offset is too small, the receiver might miss the transmitted light sequences S₁, S₂. If it is too large, it will increase the computational burden on the control unit 100 without any additional performance. The index of the correlation maximum is directly proportional to the time that has elapsed since the ADC recording started. This means that it can be used to ensure that the next ADC conversion is performed at the exact desired time in relation to when the next light sequences S₁, S₂ are transmitted.

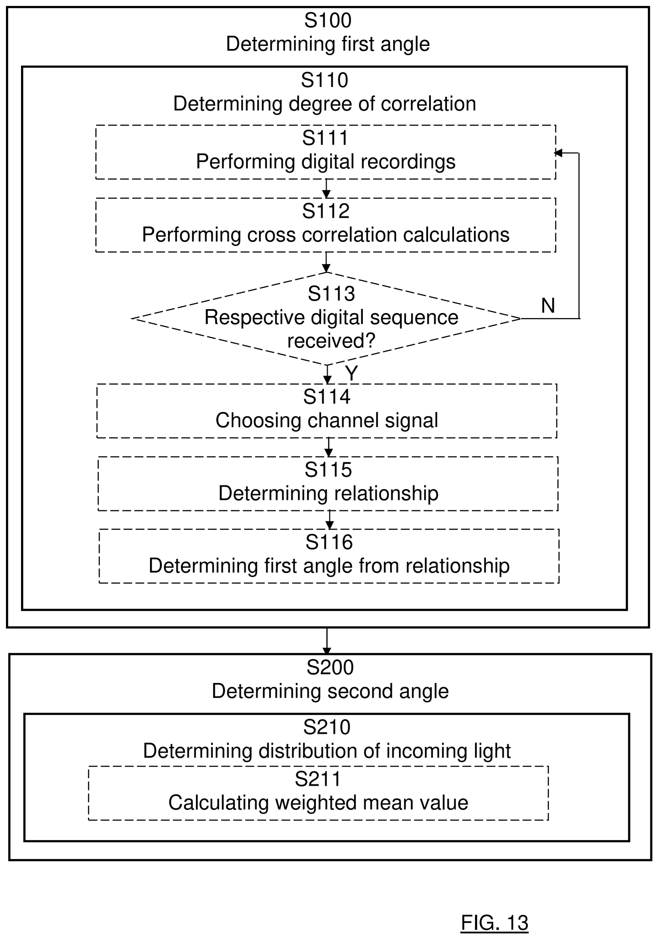

With reference to Figure 1-12 and Figure 11-13, the present disclosure also relates to a computer-implemented method performed by a robotic lawn mower main control unit 110 for a robotic lawn mower 100. The robotic lawn mower 100 uses a light reception arrangement 180 and has a charging reception arrangement 156 that is used for being electrically connected to a charging transmission arrangement at a robotic lawn mower interaction station 200 and facing a charging direction C. The light reception arrangement 180 uses a receiver lens 181 that faces the charging direction C, a receiver light diffuser 182 and a plurality of separate light sensing elements 183a-h that are used for detecting incoming light 190 that has been received via the receiver lens 181 and the receiver light diffuser 182, and has been transmitted 290 by an external light source 280.

The method comprises determining S100 a first angle A between, on the one hand, a connecting line L that runs between a light reception arrangement 280, and an external light source 280 that comprises at least two separate light transmitters 283a, 283b that are used for transmitting mutually different light sequences S₁, S₂, and, on the other hand, a transmitted light boresight direction D_{B}, and determining S200 a second angle B between the charging direction C and the connecting line L. The method further comprises determining S100 the first angle A by determining S110 a degree of correlation for each light sequence S₁, S₂ of the detected incoming light 190, and determining S200 the second angle B by determining S210 the distribution of incoming light 190 across the receiver light diffuser 182.

According to some aspects, the robotic lawn mower 100 has a forward traveling direction F and a reverse travelling direction R, where the charging direction C either corresponds to the forward traveling direction F or to the reverse travelling direction R.

According to some aspects, the method further comprises performing S111 digital recordings for the received digital sequence S₁, S₂, performing S112 cross correlation calculations between each received digital sequence S₁, S₂ in the digital recording and predetermined corresponding digital sequences S₁', S₂' and determining S113 if the respective digital sequence S₁, S₂ has been received. If this is the case, the method comprises choosing S114 the channel signal 187a-h that has provided the highest cross correlation value, determining S115 a relationship between the respective cross correlation value for the digital sequences S₁, S₁'; S₂, S₂', and determining S116 the first angle A from this relationship.

According to some aspects, the method further comprises calculating S211 a weighted mean value of the received amount of light at each light sensing element 183a-h, where the weighted mean value gives the position at which incoming light 190 has incided at the light diffuser via the receiver lens 181, and where this position is proportional to the second angle B.

According to some aspects, the light reception arrangement 180 is an infrared, IR, light reception arrangement 180 adapted to detect incoming IR light 190 that has been received via the receiver lens 181 and the receiver light diffuser 182 and has been transmitted 290 by an external IR light source 280.

According to some aspects, the IR light comprises at least one of near IR, NIR, light and Short-Wave IR, SWIR, light.

According to some aspects, the light sensing elements 183a-h are linearly arranged.

According to some aspects, the main control unit 110 is adapted to execute the methods described herein.

As indicated in Figure 1, according to some aspects, the main control unit 110 may be adapted to be in contact, suitably by means of wireless communication 241, with external units, for example a communications system 240. This may, e.g., be a third generation partnership program (3GPP) defined access network like the fourth generation (4G) or the fifth generation (5G) access networks or a satellite system such as GPS. The access network may provide access to remote networks and other resources such as, e.g., the Internet. According to some aspects, the remote server can be a part of a cloud service 242 and be adapted to communicate 241 via a communications system 241.

It is also appreciated that some processing functions may be performed by resources in a remote network 242, such as a remote server 243, where the remote network 242 can be a cloud service 242.

The main control unit 110 may be constituted by one or more control unit parts that can be separate from each other. Some or all control unit parts may be comprised in a control unit arrangement 110 and/or a remote server 243.

In Figure 3 it is schematically illustrated, in terms of a number of functional units, the components of the main control unit 110 according to embodiments of the discussions herein. Processing circuitry 115 is provided using any combination of one or more of a suitable central processing unit CPU, multiprocessor, microcontroller, digital signal processor DSP, etc., capable of executing software instructions stored in a computer program product, e.g. in the form of a storage medium 120. The processing circuitry 115 may further be provided as at least one application specific integrated circuit ASIC, or field programmable gate array FPGA. The processing circuitry thus comprises a plurality of digital logic components.

Particularly, the processing circuitry 115 is configured to cause the main control unit 110 to perform a set of operations, or steps to control the operation of the robotic lawn mower 100 including, but not being limited to, controlling the environmental detection system 170 and the light reception arrangement 180, all associated processing, and the propulsion of the robotic lawn mower 100. For example, the storage medium 120 may store the set of operations, and the processing circuitry 115 may be configured to retrieve the set of operations from the storage medium 120 to cause the main control unit 110 to perform the set of operations. The set of operations may be provided as a set of executable instructions. Thus, the processing circuitry 115 is thereby arranged to execute at least parts of the methods as herein disclosed.

The storage medium 120 may also comprise persistent storage, which, for example, can be any single one or combination of magnetic memory, optical memory, solid state memory or even remotely mounted memory.

According to some aspects, the main control unit 110 further comprises an interface 125 for communications with at least one external device such as a user terminal, the remote server 243 and/or a charging station. As such, the interface 125 may comprise one or more transmitters and receivers, comprising analogue and digital components and a suitable number of ports for wireline communication. The interface 125 can be adapted for communication with other devices, such as the remote server 243, a charging station, and/or other robotic lawn mowers. Examples of such wireless communication devices are Bluetooth^{®}, WiFi^{®} (IEEE802.11b), Global System Mobile (GSM) and LTE (Long Term Evolution), to name a few. This means that, according to some aspects, other units such as the remote server 243 are adapted to partly execute the methods as herein disclosed.

According to some aspects, the main control unit 110 further comprises the ADC unit 126 as described herein.

With reference to Figure 10, the present disclosure also relates to a computer program product 500 comprising computer executable instructions 510 stored on media 520 to execute the methods described herein.

The present disclosure is not limited to the examples described above, but may vary within the scope of the appended claims. For example, the diffusers can be achieved in many ways. One way would be to edge light a piece of plastic or glass that has one side which is rough. This structure can provide relatively low losses. Another option is to use a diffused reflector, and refract light from it.

According to some aspects, the ADC recording can be made at the same time as the main control unit 110 is performing calculations on the previous ADC recording. This is possible because the ADC writes directly to memory using DMA. The could result in a higher output angle data rate.

## Claims

1. A robotic lawn mower (100) comprising a body (140), a main control unit (110), at least one rotatable grass cutting disc (160) having a disc rotation axle (165), at least one pair of drive wheels (131A, 131B) and a charging reception arrangement (156) that is adapted to be electrically connected to a charging transmission arrangement at a robotic lawn mower interaction station (200) and faces a charging direction (C),
the robotic lawn mower (100) further comprising a light reception arrangement (180) that comprises a receiver lens (181) that faces the charging direction (C), a receiver light diffuser (182) and a plurality of separate light sensing elements (183a-h) that are adapted to detect incoming light (190) that has been received via the receiver lens (181) and the receiver light diffuser (182), and has been transmitted (290) by an external light source (280),
where the main control unit (110) is adapted to determine
a first angle (A) between, on the one hand, a connecting line (L) that runs between the light reception arrangement (180) and an external light source (280) that comprises at least two separate light transmitters (283a, 283b) that are adapted to transmit mutually different light sequences (S₁, S₂), and, on the other hand, a transmitted light boresight direction (D_{B}), and
a second angle (B) between the charging direction (C) and the connecting line (L), where the main control unit (110) is adapted to determine the first angle (A) by determining a degree of correlation for each light sequence (S₁, S₂) of the detected incoming light (190), and
where the main control unit (110) is adapted to determine the second angle (B) by determining the distribution of incoming light (190) across the receiver light diffuser (182).

2. The robotic lawn mower (100) according to claim 1, wherein the robotic lawn mower (100) is adapted for a forward traveling direction (F) and a reverse travelling direction (R), where the charging direction (C) either corresponds to the forward traveling direction (F) or to the reverse travelling direction (R).

3. The robotic lawn mower (100) according to any one of the claims 1 or 2, wherein the light sensing elements (183a-h) are constituted by photo transistors that mainly are linearly arranged in a horizontal plane (H).

4. The robotic lawn mower (100) according to any one of the previous claims, wherein each light sensing element (183a-h) is connected in series with a corresponding first amplifier (184a), a corresponding high pass filter (185a) and a corresponding second amplifier (186a) such that a corresponding series circuit (187ah) is formed, each series circuit (187a-h) forming a corresponding signal channel.

5. The robotic lawn mower (100) according to claim 4, wherein each first amplifier (184a) is a transimpedance amplifier adapted to bias and amplify a corresponding first signal (S₁) received from the corresponding light sensing element (183a-h), and where each second amplifier (186a) is a programmable gain amplifier, PGA, that is adapted to amplify a third signal (S₃) received from the high pass filter (185a) and is controlled by the main control unit (110).

6. The robotic lawn mower (100) according to any one of the claims 4 or 5, wherein the light sequences (S₁, S₂) are digital light sequences (S₁, S₂), where the main control unit (110) comprises an Analog to Digital Converter, ADC, unit (126) adapted to sample the signal output from each signal channel (187a-h).

7. The robotic lawn mower (100) according to claim 6, wherein the main control unit (110) is adapted to perform ADC recordings for the corresponding output (188a-h) of each signal channel (187a-h) and to perform cross correlation calculations between each received digital sequence (S₁, S₂) in the ADC recording and predetermined corresponding digital sequences (S₁', S₂') to determine if the respective digital sequence (S₁, S₂) has been received, and if this is the case, the main control unit (110) is adapted to choose the channel signal (187a-h) that has provided the highest cross correlation value, and to determine a relationship between the respective cross correlation value for the digital sequences (S₁, S₁'; S₂, S₂'), and to determine the first angle (A) from this relationship.

8. The robotic lawn mower (100) according to any one of the previous claims, wherein the main control unit (110) is adapted to calculate a weighted mean value of the received amount of light at each light sensing element (183a-h), where the weighted mean value gives the position at which incoming light (190) has incided at the light diffuser via the receiver lens (181), and where this position is proportional to the second angle (B).

9. A robotic lawn mower interaction station (200) adapted to receive an oncoming robotic lawn mower (100), where the interaction station (200) comprises a charging transmission arrangement (210) that is adapted to provide a charge current to a charging reception arrangement (156) of a docked robotic lawn mower (100), where the interaction station (200) comprises an light transmission arrangement (280) which in turn comprises at least two separate light transmitters (283a, 283b) that are adapted to transmit mutually different light sequences (S₁, S₂) via a transmitter light diffuser (282) and a transmitter lens (281).

10. The interaction station (200) according to claim 9, wherein the light sequences (S₁, S₂) are digital light sequences (S₁, S₂).

11. The interaction station (200) according to any one of the claims 9 or 10, wherein the light transmitters (283a, 283b) are linearly arranged and adapted to transmit mutually different light sequences along a transmitted light boresight direction (D_{B}).

12. A computer-implemented method performed by a robotic lawn mower main control unit (110) for a robotic lawn mower (100) that uses a light reception arrangement (180) and has a charging reception arrangement (156) that is used for being electrically connected to a charging transmission arrangement at a robotic lawn mower interaction station (200) and facing a charging direction (C), where the light reception arrangement (180) uses a receiver lens (181) that faces the charging direction (C), a receiver light diffuser (182) and a plurality of separate light sensing elements (183a-h) that are used for detecting incoming light (190) that has been received via the receiver lens (181) and the receiver light diffuser (182), and has been transmitted (290) by an external light source (280),
where the method comprises
determining (S100) a first angle (A) between, on the one hand, a connecting line (L) that runs between a light reception arrangement (280), and an external light source (280) that comprises at least two separate light transmitters (283a, 283b) that are used for transmitting mutually different light sequences (S₁, S₂), and, on the other hand, a transmitted light boresight direction (D_{B}), and
determining (S200) a second angle (B) between the charging direction (C) and the connecting line (L),
where the method further comprises
determining (S100) the first angle (A) by determining (S110) a degree of correlation for each light sequence (S₁, S₂) of the detected incoming light (190), and
determining (S200) the second angle (B) by determining (S210) the distribution of incoming light (190) across the receiver light diffuser (182).

13. The method according to claim 12, further comprising
performing (S111) digital recordings for the received digital sequence (S₁, S₂);
performing (S112) cross correlation calculations between each received digital sequence (S₁, S₂) in the digital recording and predetermined corresponding digital sequences (S₁', S₂');
determining (S113) if the respective digital sequence (S₁, S₂) has been received, and if this is the case, the method comprises
choosing (S114) the channel signal (187a-h) that has provided the highest cross correlation value;
determining (S115) a relationship between the respective cross correlation value for the digital sequences (S₁, S₁'; S₂, S₂'); and
determining (S116) the first angle (A) from this relationship.

14. The method according to any one of the claims 12 or 13, further comprising
calculating (S211) a weighted mean value of the received amount of light at each light sensing element (183a-h), where the weighted mean value gives the position at which incoming light (190) has incided at the light diffuser via the receiver lens (181), and where this position is proportional to the second angle (B).

15. A computer program product (500) comprising computer executable instructions (510) stored on media (520) to execute the methods according to any one of the claims 12-14.
